(19) Europäisches Patentamt

European Patent Office

Office européen des brevets

(11) **EP 1 156 953 B1**

(12) **EUROPÄISCHE PATENTSCHRIFT**

(45) Veröffentlichungstag und Bekanntmachung des Hinweises auf die Patenterteilung:
**08.03.2006   Patentblatt 2006/10**

(21) Anmeldenummer: **00993396.1**

(22) Anmeldetag: **06.12.2000**

(51) Int Cl.:
***B60T 8/00*** *(2006.01)*

(86) Internationale Anmeldenummer:
**PCT/DE2000/004341**

(87) Internationale Veröffentlichungsnummer:
**WO 2001/044031 (21.06.2001 Gazette 2001/25)**

(54) **VERFAHREN UND VORRICHTUNG ZUR EINSTELLUNG DER BREMS- UND/ODER ANTRIEBSWIRKUNG AN KRAFTFAHRZEUGRÄDERN**

METHOD AND DEVICE FOR ADJUSTING THE BRAKING AND/OR DRIVE EFFECTS ON WHEELS OF MOTOR VEHICLES

PROCEDE ET DISPOSITIF DE REGLAGE DE L'EFFET DE FREINAGE ET/OU D'ENTRAINEMENT SUR LES ROUES D'UN VEHICULE A MOTEUR

(84) Benannte Vertragsstaaten:
**DE FR IT**

(30) Priorität: **15.12.1999   DE 19960337**

(43) Veröffentlichungstag der Anmeldung:
**28.11.2001   Patentblatt 2001/48**

(73) Patentinhaber: **ROBERT BOSCH GMBH
70442 Stuttgart (DE)**

(72) Erfinder:
• **SCHMITT, Johannes
71706 Markgroeningen (DE)**
• **MATTERN, Klaus-Peter
71717 Beilstein (DE)**
• **GAWLIK, Rolf
71717 Beilstein (DE)**

(56) Entgegenhaltungen:
DE-A- 3 841 958          DE-A- 4 426 960
DE-A- 4 430 462          DE-A- 19 519 199

## Beschreibung

Stand der Technik

Die Erfindung geht aus von einem Verfahren bzw. einer Vorrichtung mit den Merkmalen der Oberbegriffe der unabhängigen Ansprüche.

Aus dem Stand der Technik ist eine Vielzahl von Systemen zur Antiblockierregelung, zur Antriebsschlupfregelung bzw. zur Fahrstabilitätsregelung bei Kraftfahrzeugen bekannt. Diese Systeme gehen im allgemeinen wenigstens von den Raddrehgeschwindigkeiten bzw. den Raddrehzahlen der Fahrzeugräder aus. Bevor die Raddrehzahlen jedoch zur Regelung herangezogen werden, werden sie im allgemeinen durch einen sogenannten Reifentoleranzabgleich korrigiert. Solch eine Regelanlage für ein Kraftfahrzeug wird beispielsweise in der DE 42 30 295 A1 beschrieben, bei der die durch Toleranzen zwischen den Reifen entstehenden Fehler der Radgeschwindigkeiten ausgeglichen werden. Solche Toleranzen sind beispielsweise durch verschiedene Raddurchmesser bedingt. Beispielsweise wird in der DE 42 30 295 A1 eine Tiefpaßfilterung im Zusammenhang mit einem Reifentoleranzabgleich offenbart.

Weiterhin ist beispielsweise aus der EP 0 510 466 A1 eine Schlupfregelanlage bekannt, bei der die Raddrehgeschwindigkeiten zur Schlupfbildung benutzt werden. Um Reifentoleranzen auszugleichen werden, die Raddrehzahlen korrigiert. Bei der Ermittlung der entsprechenden Korrekturfaktoren muß eine möglicherweise vorliegende Kurvenfahrt des Fahrzeugs Berücksichtigung finden.

Die aus dem Stand der Technik bekannten Varianten zum Reifentoleranzabgleich benötigen im allgemeinen einen relativ lange Zeitraum. Findet ein Eingriff in die Brems- und/oder Antriebsregelung kurz nach dem Start des Fahrzeugs statt, so kann es unter Umständen durch einen langsam Reifentoleranzabgleich zu ungünstigen Bedingungen kommen.

Falls ein Reifenschaden an einem Kraftfahrzeug vorliegt, ist oftmals nur ein sogenanntes Not- bzw. Ersatzrad vorgesehen. Dieses Not- bzw. Ersatzrad hat gegenüber den Normalrädern ein signifikant geringeren Durchmesser, was es durch einen Reifentoleranzabgleich zu berücksichtigen gilt. Aus der EP 0 449 845 B 1 ist beispielsweise eine Erkennung solcher Not- bzw. Ersatzräder bekannt.

Die DE 44 30 462 beschreibt ein Verfahren zum schnellen Erkennen eines Notrades, wobei das Drehverhalten der Räder mit Radsensoren ermittelt wird und bei dem die Unterschiede der Reifenabrollumfänge durch Korrekturfaktoren erfasst werden. Diese Korrekturfaktoren werden abschließend zur Anpassung eines im Fahrzeug vorhandenen elektronischen Regelungssystems verwendet. Dabei wird für jedes Rad ein Kurzzeit- und ein Langzeit-Korrekturfaktor gebildet, wobei nach regelmäßig wiederkehrenden Ereignissen, insbesondere nach jedem Anlassen des Fahrzeugmotors, die Kurzzeit-Korrekturfaktoren der einzelnen Räder untereinander verglichen werden. Ein Notrad wird dabei erkannt, wenn gleichzeitig die Kurzzeit-Korrekturfaktoren von drei Rädern annähernd gleich sind, der Kurzzeit-Korrekturfaktor des vierten Rades für eine vorgegebene Mindestzeitspanne einen relativ hohen Wert annimmt und der Kurzzeit-Korrekturfaktor des vierten Rades während der Mindestzeitspanne annähernd konstant bleibt. Wird ein Notrad auf Art erkannt, wird einmalig der Langzeit-Korrekturfaktor den Kurzzeit-Korrekturfaktoren des jeweiligen Rades gleichgesetzt. Nach diesem schnellen Lernschritt bei der Erkennung eines Notrades, welches nach dem Zünden des Motors nur einmal erlaubt ist, wird das Lernverfahren behutsam fortgesetzt.

Vorteile der Erfindung

Wie erwähnt, geht die Erfindung aus von einem Verfahren bzw. einer Vorrichtung zur Einstellung der Brems- und/oder Antriebswirkung an den Rädern eines Kraftfahrzeugs. Den Rädern sind Sensoren zugeordnet, die Drehzahlsignale abgeben, die die Drehbewegungen der Räder repräsentieren. Diese Drehzahlsignale werden mittels einer Korrektur, dem Reifentoleranzabgleich, korrigiert. Die Einstellung der Brems- und/oder Antriebswirkung wird dann wenigstens abhängig von korrigierten Drehzahlsensorsignalen getätigt.

Der Kern der Erfindung besteht darin, dass die Korrektur, also der Reifentoleranzabgleich, wenigstens zwei unterschiedliche Betriebsmodi aufweist. Weiterhin wird ermittelt, ob ein montiertes Ersatz- oder Notrad, dass einen geringeren Durchmesser als die übrigen Räder aufweist, vorliegt. Abhängig von dem ermittelten Vorliegen eines Ersatzrades wird dann erfindungsgemäß einer der Betriebsmodi ausgewählt.

Erfindungsgemäß ist dem eigentlichen Reifentoleranzabgleich ein Auswahlmodul vorgeschaltet, dass bei Vorliegen eines Notrades einen bestimmten Betriebsmodus auswählt. Dieser bestimmte Betriebsmodus des Reifentoleranzabgleichs ermöglicht in vorteilhafter Weise einen sehr schnellen Reifentoleranzabgleich. Der eigentliche, langsame jedoch im allgemeinen genauere Reifentoleranzabgleich folgt dem ersten, schnellen Reifentoleranzabgleich. Durch diesen Abgleichalgorythmus wird die Drehgeschwindigkeit eines Not- bzw. Ersatzrades sehr schnell an die anderen Radgeschwindigkeiten angepaßt. Durch die Erfindung erfolgt der Notradabgleich so, dass bereits beim ersten Bremsen die vollständige Funktionalität eines Antiblockierregel-, Antriebsschlupfregel- und/oder Fahrstabilitätssystems bzw. eines elektronischen Bremskraftverteilersystems gegeben ist. Es sind somit keine zusätzlichen Maßnahmen notwendig.

In einer vorteilhaften Ausgestaltung der Erfindung ist vorgesehen, dass die Korrektur, also der Reifentoleranzabgleich, in einem ersten Betriebsmodus mit einer geringeren Filterzeitkonstante schneller als in einem zweiten Betriebsmodus mit einer größeren Filterzeitkonstante ausgeführt wird.

Eine weitere Ausgestaltung der Erfindung geht davon aus, dass der normale, langsame Reifentoleranzabgleich abhängig vom Ausgangsmoment des Fahrzeugmotors stattfindet. Dies ist beispielsweise der eingangs erwähnten DE 42 30 295 A1 zu entnehmen. Für den normalen beziehungsweise langsamen Reifentoleranzabgleich muß also eine bestimmte Bedingung für das Motormoment vorliegen, damit der Reifentoleranzabgleich getätigt wird. Beispielsweise muß das an den Rädern wirkende Antriebs- oder Schleppmoment hinreichend klein sein. Diese Bedingung verlangsamt jedoch den Reifentoleranzabgleich in den Fällen, in denen das Motormoment diese Bedingung nicht erfüllt. Gemäß dieser Ausgestaltung der Erfindung ist vorgesehen, dass die Korrektur in einem ersten, schnellen Betriebsmodus des Reifentoleranzabgleichs unabhängig von dem Motormoment getätigt wird.

Weiterhin ist bekannt, den Reifentoleranzabgleich an die Bedingung zu knüpfen, dass keine Kurvenfahrt vorliegt. In einer weiteren Ausgestaltung der Erfindung ist vorgesehen, dass erfaßt wird, ob das Fahrzeug eine Kurve fährt. Der Kern dieser Ausgestaltung besteht darin, dass in dem ersten, schnellen Betriebsmodus der Reifentoleranzabgleich unabhängig von einer erfaßten Kurvenfahrt getätigt wird.

In einer weiteren Ausgestaltung der Erfindung ist vorgesehen, dass in dem ersten, schnellen Betriebsmodus der Reifentoleranzabgleich bei geringerer Fahrzeuglängsgeschwindigkeiten vorgenommen wird als in einem zweiten, langsameren Betriebsmodus.

Die Ermittlung, ob ein montiertes Not- beziehungsweise Ersatzrad vorliegt, wird jedoch vorteilhafter Weise nur bei Überschreitung eines vorgebbaren Geschwindigkeitsschwellenwertes für die Fahrzeuglängsgeschwindigkeit begonnen.

In einer weiteren vorteilhaften Ausgestaltung der Erfindung ist vorgesehen, dass die Ermittlung, ob ein montiertes Notbeziehungsweise Ersatzrad vorliegt, derart geschieht, dass

- aus den Drehzahlsignalen das Rad mit der größten Drehgeschwindigkeit ermittelt wird,
- geprüft wird, ob die Drehgeschwindigkeit des Rades mit der größten Drehgeschwindigkeit von der Geschwindigkeit wenigstens eines anderen Rades, des an derselben Fahrzeugachse montierten Rades, in vorgebbarer Weise abweicht,
- aus den Differenzen der Drehzahlen der Räder an der Achse, an der das Rad mit der größten Drehgeschwindigkeit nicht montiert ist, ermittelt wird, ob eine Kurvenfahrt vorliegt, und
- das Rad mit der größten Drehgeschwindigkeit als Notbeziehungsweise Ersatzrad ermittelt wird, wenn die Drehgeschwindigkeit dieses Rades von der Drehgeschwindigkeit wenigstens eines anderen Rades in vorgebbarer Weise, und insbesondere eine vorgebbare Zeitdauer lang, abweicht und keine Kurvenfahrt vorliegt.

In einer weiteren Ausgestaltung der Erfindung ist vorgesehen, dass der Modus, der bei Vorliegen eines Notbeziehungsweise Ersatzrades gewählt wird, abhängig vom Ergebnis eines Vergleichs des korrigierten Ausgangssignals des Not- beziehungsweise Ersatzrades mit einem Ausgangssignal wenigstens eines Sensors an einem anderen Rad beendet wird. Dies hat den Hintergrund, dass der schnelle bzw. tolerante Reifentoleranzabgleich nur ein erstes schnelles Angleichen des Notrades an das Bezugs- bzw. Referenzrad ermöglichen soll. Danach soll der normale Reifentoleranzabgleich mit seinen Freigabebedingungen wieder gelten. Der schnelle bzw. tolerante Reifentoleranzabgleich wird deshalb beendet, wenn die Drehzahlabweichung des Not- bzw. Ersatzrades zu den anderen Raddrehgeschwindigkeiten kleiner als beispielsweise 1,5 % ist.

Weitere vorteilhafte Ausgestaltungen sind den Unteransprüchen zu entnehmen.

Zeichnung

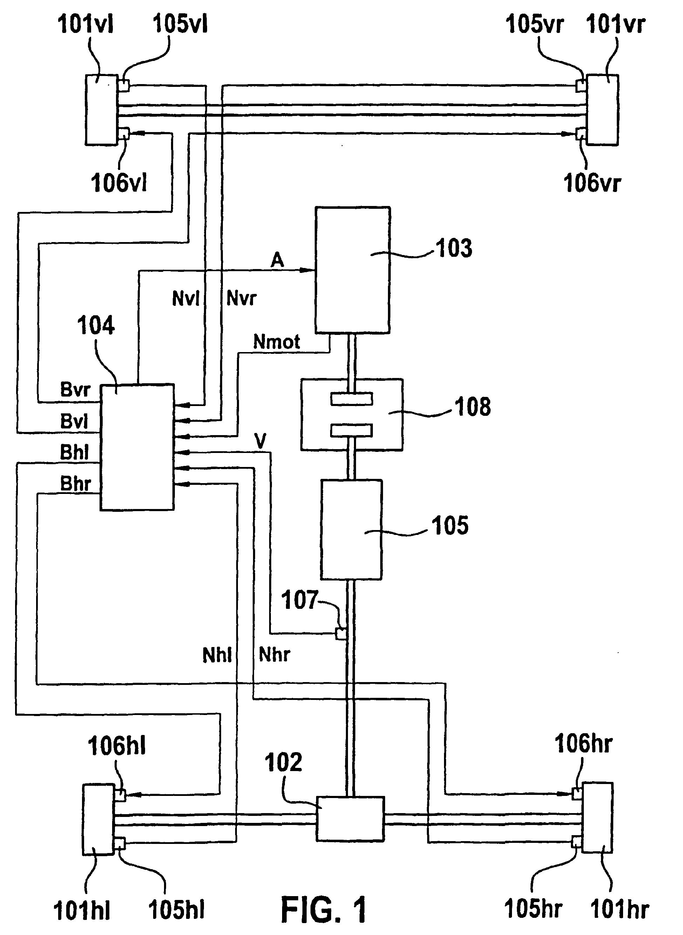

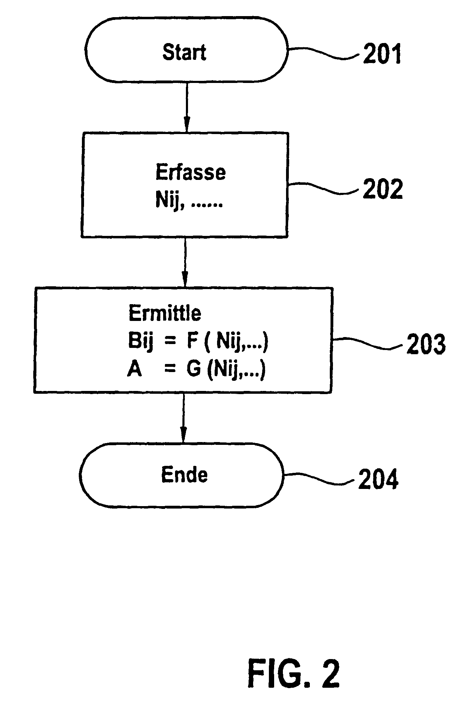

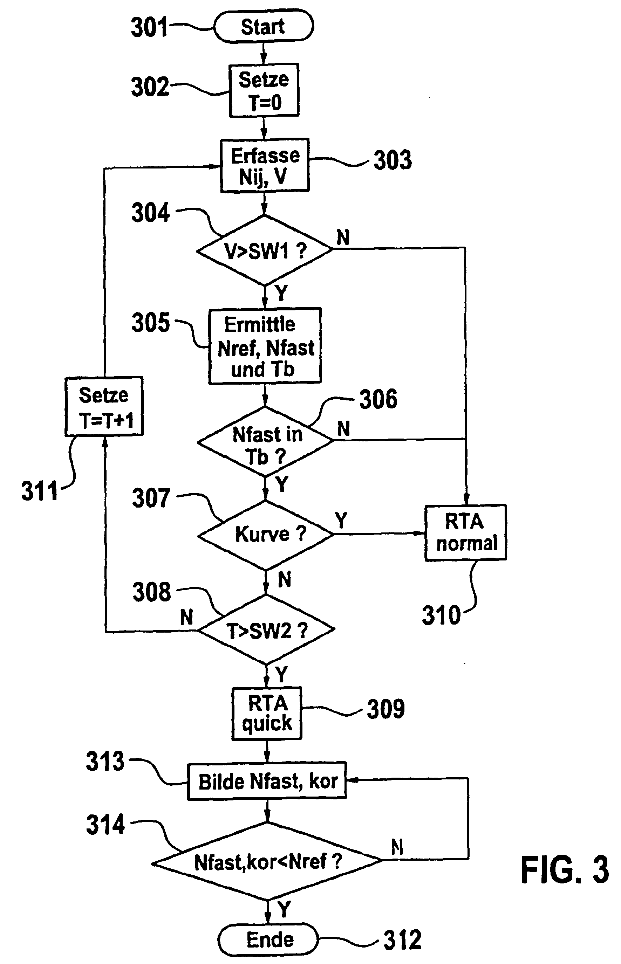

Die Figur 1 zeigt ein Übersichtsblockschaltbild der Erfindung. Die Figur 2 zeigt den prinzipiellen Ablauf der Einstellung der Brems- und/oder Antriebswirkung an den Rädern, während die Figur 3 den detaillierten Ablauf einer Ausführungsform der Erfindung darstellt.

Ausführungsbeispiel

Im folgenden werden Ausgestaltungen der Erfindung anhand von Ausführungsbeispielen dargestellt.

Die Figur 1 zeigt schematisch ein Fahrzeug mit den Fahrzeugrädern $101ij$. Im folgenden bezeichnet der Index $i$ die Zugehörigkeit der entsprechenden Größe zur hinteren ($i = h$) bzw. zur vorderen ($i = v$) Fahrzeugachse. Der Index $j$ gibt die Zugehörigkeit der entsprechenden Größe zur rechten ($j = r$) bzw. zur linken ($j = 1$) Fahrzeugseite an. An den Fahrzeugrädern $101ij$ sind Drehzahlsensoren $105ij$ sowie Radbremseinheiten $106ij$ angebracht. Die Raddrehzahlfühler $105ij$ geben ihre Ausgangssignale $Nij$ an die Steuereinheit $104$ weiter. In der Steuereinheit $104$ werden wenigstens abhängig von den Raddrehzahlwerten $Nij$ Ansteuersignale $Bij$ für die Radbremseinheiten $106ij$ gebildet. Dies geschieht in allgemein bekannter Weise, indem beispielsweise aus den Raddrehzahlen $Nij$ Schlupfwerte für die einzelnen Fahrzeugräder $101ij$ gebildet werden, woraufhin die Brems- und/oder Antriebswirkung an den einzelnen Fahrzeugrädern durch die Signale $Bij$ bzw. A derart eingestellt wird, dass ein bestimmter Brems- und/oder Antriebsschlupf nicht überschritten wird.

Weiterhin ist in der Figur 1 der Antriebsstrang des Fahrzeugs skizziert. Dabei ist der Fahrzeugmotor mit dem Bezugszeichen $103$ markiert, dessen Ausgangsleistung bzw. Ausgangsmoment bzw. Ausgangsdrehzahl durch das Ansteuersignal A mittels der Steuereinheit 104 gesteuert bzw. geregelt werden kann. Das Ausgangsmoment des Motors 103, das im allgemeinen als Momentensignal Mmot in der Motorsteuerung vorliegt, wird an das Steuergerät 104 geleitet.

Der Fahrzeugmotor 103 ist über die Kupplung 108 mit dem Getriebe 105 verbunden. Das Getriebe 105 ist wiederum über das Differentialgetriebe 102 mit den Antriebsrädern an der Hinterachse verbunden. Die Getriebeausgangsdrehzahl wird mittels des Drehzahlsensors 107 ermittelt. Die Getriebeausgangsdrehzahl ist, korrigiert um die Übersetzung des Differentialgetriebes 102 bzw. der Raddurchmesser an den Antriebsrädern ein Maß für die Fahrzeuglängsgeschwindigkeit V.

In der Figur 2 ist schematisch die Einstellung der Brems- und/oder Antriebswirkung an den Fahrzeugrädern 101ij mittels des Steuergeräts 104 dargestellt. Nach dem Startschritt 201 werden im folgenden Schritt 202 die Raddrehzahlsignale Nij sowie weitere Signale erfaßt. Im Schritt 203 werden wenigstens abhängig von den erfaßten Raddrehzahlsignalen Nij die Ansteuersignale für die Radbremsen 106ij (Ansteuersignal Bij) und das Ansteuersignal A für den Fahrzeugmotor 103 gebildet. Dies ist im Schritt 203 durch die funktionale Abhängigkeit F und G angedeutet. Nach dem Endschritt 204 wird der in der Figur 2 gezeigte Ablauf erneut gestartet.

Die Bildung der Ansteuersignale Bij und A ist in vielfältiger Weise im Stand der Technik beschrieben und soll hier nicht näher ausgeführt werden.

Die Figur 3 zeigt einen detaillierten Ablauf eines erfindungsgemäßen Ausführungsbeispiels.

Nach dem Startschritt 301 wird im Schritt 302 zunächst der Zählerwert T auf den Wert Null gesetzt. Im Schritt 303 werden die Raddrehzahlen Nij bzw. die Fahrzeuglängsgeschwindigkeit erfaßt.

In der Abfrage 304 wird die Fahrzeuglängsgeschwindigkeit V mit einem Schwellenwert SW1 verglichen. Überschreitet die Fahrzeuglängsgeschwindigkeit V den Schwellenwert SW1 nicht, so werden die folgenden Bedingungen für den schnellen Reifentoleranzabgleich 309 nicht überprüft. In diesem Fall wird der normale Reifentoleranzabgleich 310 mit seinen speziellen Zulassungsvoraussetzungen (beispielsweise Bedingungen für das Motormoment, Kurvenfahrt usw.) vorgenommen.

Überschreitet jedoch die Fahrzeuglängsgeschwindigkeit V den Schwellenwert SW1, so bewegt sich das Fahrzeug mit einer hinreichend hohen Fahrzeuggeschwindigkeit, woraufhin im Schritt 305 das sich am schnellsten drehende Rad erfaßt wird. Dieses Rad weist die nicht korrigierte Radgeschwindigkeit Nfast auf. Weiterhin wird die nicht korrigierte Radgeschwindigkeit Nref des anderen Rades der gleichen Achse (Referenzrad) zur weiteren Verarbeitung in ein temporäres Register geladen.

Darüber hinaus wird im Schritt 305 ein Toleranzband Tb gebildet. Hierzu sind vorgebbare Schwellenwerte SWu und SWo vorgesehen. Unter Verwendung der Radgeschwindigkeit Nref des Referenzrades wird das Toleranzband Tb entsprechend den möglicherweise montierten Noträdern berechnet. Hierzu wird zu der Radgeschwindigkeit Nref des Referenzrades ein unterer Wert SWu sowie ein oberer Wert SWo addiert. Auf diese Weise erhält man das Toleranzband Tb:

$$Tb = \left[ \left( Nref + SWu \right), \left( Nref + SWo \right) \right]$$

Im Schritt 306 wird festgestellt, ob die Geschwindigkeit Nfast des schnellsten Rades innerhalb des Toleranzbandes Tb liegt. Ist dies nicht der Fall, so handelt es sich bei dem schnellsten Rad offensichtlich nicht um ein Not- bzw. Ersatzrad. Es wird dann der normale Reifentoleranzabgleich 310 vorgenommen.

Wird jedoch im Schritt 306 festgestellt, dass die Drehgeschwindigkeit Nfast innerhalb des Toleranzbandes liegt, so handelt es sich bei diesem Rad um ein Ersatz- bzw. Notrad. Im folgenden Schritt 307 wird dann festgestellt, ob sich das Fahrzeug momentan in einer Kurvenfahrt befindet oder nicht. Die Kurvenfahrt wird anhand folgender Bedingung geprüft.

Die Differenz der Radgeschwindigkeiten der Achse, an der das vermeintliche Notrad (schnellstes Rad) sich nicht befindet, muß kleiner bzw. gleich einem bestimmten Schwellenwert sein. Ist dies der Fall, so ist davon auszugehen, dass das Fahrzeug eine Kurve mit größerem Kurvenradius beziehungsweise geradeaus fährt. In diesem Fall wird zu dem Schritt 308 übergegangen. Befährt jedoch das Fahrzeug eine Kurve mit kleinem Kurvenradius, so wird der normale Reifentoleranzabgleich 310 mit seinen speziellen Zulassungsvoraussetzungen vorgenommen. Wird beispielsweise festgestellt, dass sich das Notrad (schnellstes Rad) an der Vorderachse befindet, so o wird zur Kurvenerkennung der Betrag der Drehzahldifferenz ΔN = |(Nhr - Nhl)| der Hinterräder mit einem relativ kleinen Schwellenwert SW3, der beispielsweise abhängig von der Fahrzeuglängsgeschwindigkeit gewählt sein kann, verglichen. Unterschreitet die Drehzahldifferenz ΔN den Schwellenwert SW3, so liegt im Wesentlichen keine Kurvenfahrt vor. Überschreitet die Drehzahldifferenz ΔN den Schwellenwert SW3, so liegt eine Kurvenfahrt vor.

Zur Kurvenerkennung im Schritt 307 kann auch ein Lenkwinkelsignal, ein Querbeschleunigungssignal und/oder ein Gierwinkelsignal benutzt werden, sofern die entsprechenden Sensoren im beziehungsweise am Fahrzeug vorhanden sind.

In der Abfrage 308 wird festgestellt, ob der Zählerwert T einen entsprechenden vorgebbaren Schwellenwert SW2 überschreitet. Ist dies nicht der Fall, so wird im Schritt 311 der Zählerwert um einen Zählerwert erhöht und der schon beschriebene Ablauf mit dem Schritt 303 erneut begonnen.

Wird jedoch im Schritt 308 festgestellt, dass der Zählerwert den Schwellenwert SW2 überschreitet, so liegen die Bedingungen für den schnellen Reifentoleranzabgleich 309 hinreichend lange vor. In diesem Fall wird der schnelle Reifentoleranzabgleich 309 vorgenommen.

Der schnelle bzw. tolerante Reifentoleranzabgleich 309 soll nur ein erstes schnelles Angleichen des Notrades an das Bezugs- bzw. Referenzrad ermöglichen. Danach soll der normale Reifentoleranzabgleich mit seinen Freigabebedingungen wieder gelten. Dies wird dadurch erreicht, dass im Schritt 313 die Raddrehzahl Nfast des Notrades korrigiert wird zu der korrigierten Raddrehzahl Nfast,kor. Im folgenden Schritt 314 wird der korrigierte Wert Nfast,kor mit der Drehzahl Nref des Referenzrades verglichen. Solange der korrigierte Wert Nfast,kor noch größer als die Referenzdrehzahl Nref ist, wird der schnelle Reifentoleranzabgleich 309 aufrechterhalten. Sobald jedoch der korrigierte Wert Nfast,kor die Drehzahl Nref der Referenzdrehzahl unterschreitet, wird der schnelle Reifentoleranzabgleich mit dem Endschritt 312 beendet. Im Schritt 314 kann auch die Differenz (Nfast,kor - Nref) mit einem Schwellenwert, der beispielsweise 1,5% von f) mit einem Schwellenwert, der beispielsweise 1,5% von Nref beträgt, verglichen werden.

Nach der Beendigung der Korrektur in dem Betriebsmodus $RTA_{quick}$ wird dieser Betriebsmodus $RTA_{quick}$ wenigstens eine Zeitdauer lang gesperrt. Insbesondere kann vorgesehen sein, dass die Sperrung bis wenigstens zum nächsten Neustart des Fahrzeugs solange aufrechterhalten wird. So wird beispielsweise ein weiterer, unter Umständen fehlerhafter, Schnell-Abgleich während der weiteren Fahrt vermieden. Die Sperrung dieses Betriebsmodus $RTA_{quick}$ kann jedoch dann aufgehoben oder nicht veranlaßt werden, wenn während des Betriebsmodus $RTA_{quick}$ das Vorliegen einer Kurvenfahrt ermittelt worden ist. In diesem Fall wird der Modus $RTA_{quick}$ weiterhin zugelassen.

Erfindungsgemäß detektiert ein Softwaremodul den typischen Geschwindigkeitsunterschied eines Not- bzw. Ersatzrades zu anderen Raddrehgeschwindigkeiten. Erfindungsgemäß werden dann bestimmte Voraussetzungen überprüft:

- Das Fahrzeug fährt mit hinreichend hoher Geschwindigkeit (Abfrage 304).
- Kein weiteres Rad erfüllt die Not- bzw. Ersatzradbedingung.
- Ein Zeitkriterium ist erfüllt (Abfrage 308).

Sind diese Bedingungen erfüllt, so wird das nachfolgende Reifentoleranzabgleichmodul dahingehend modifiziert, dass es tolerant freigegeben und schnell ausgeführt wird, bis das Notrad zu einem gewissen Prozentsatz abgeglichen ist. Dies erfolgt in der Art, dass

- bereits beim Losfahren mit dem Reifentoleranzabgleich begonnen wird,
- der Reifentoleranzabgleich unabhängig vom Motormoment ausgeführt wird,
- der Reifentoleranzabgleich schneller (geringere Filterzeitkonstante) ausgeführt wird und
- der Reifentoleranzabgleich kurventolerant, d.h. unabhängug davon, ob eine Kurvenfahrt vorliegt oder nicht, ausgeführt wird.

Der schnelle bzw. tolerante Reifentoleranzabgleich wird beendet, wenn die Drehzahlabweichung des Not- bzw. Ersatzrades zu den anderen Raddrehgeschwindigkeiten kleiner als beispielsweise 1,5 % ist. Ausnahmsweise wird der schnelle Reifentoleranzabgleich nach einer Kurvenfahrt wiederholt, wenn dieser schnelle Reifentoleranzabgleich vor oder während einer Kurvenfahrt ausgeführt wurde.

Durch die Erfindung erfolgt der Notradabgleich so, dass bereits beim ersten Bremsen die vollständige Funktionalität eines Antiblockierregelsystems bzw. eines elektronischen Bremskraftverteilersystems gegeben ist. Es sind keine zusätzlichen Maßnahmen mehr notwendig.

In einer weiteren Ausgestaltung der Erfindung ist vorgesehen, dass ein Statussignal dann generiert wird, wenn ein montiertes Not- beziehungsweise Ersatzrad vorliegt. Abhängig von diesem Statussignal werden dann die Funktion anderer Fahrzeugsysteme, wie Systeme zur Antiblockierregelung, zur Antriebsschlupfregelung und/oder zur Fahrstabilitätsregelung, modifiziert.

Hierbei ist insbesondere vorgesehen, dass das Statussignal über eine Datenleitung, insbesondere über ein Bus-System (CAN-Bus, Controller Area Network), anderen Fahrzeugsystemen zur Steuerung und/oder Regelung von Fahrzeugfunktionen zugeführt wird. So kann beispielsweise eine Begrenzung der Fahrzeuglängsgeschwindigkeit vorgesehen sein, wenn das Vorliegen eines Not- beziehungsweise Ersatzrad erfasst wird.

Weiterhin kann das Statussignal zur Ansteuerung einer vom Fahrer beobachtbaren Anzeige verwendet werden. Im Falle des Vorliegens eines Not- beziehungsweise Ersatzrades dies dem Fahrer angezeigt wird. Dadurch wird der Fahrer ständig daran erinnert, dass ein Not- beziehungsweise Ersatzrad montiert ist.

Darüber hinaus können Überwachungsmittel vorgesehen sein, mittels der Schlupfwerte der Räder erfasst und dahingehend ausgewertet werden, dass bei Vorliegen von Schlupfwerten bestimmten vorgebbaren Ausmaßes vorgebbare Maßnahmen eingeleitet werden. Beispielsweise kann bei einer solchen Dauerschlupfüberwachung vorgesehen sein, dass dann, wenn hinreichend hohe Schlupfwerte hinreichend lange vorliegen, Brems- und/oder Antriebsregelsysteme abgeschaltet werden. Werten diese Überwachungsmittel die unkorrigierten Raddrehzahlen aus, so so werden die Überwachungsmittel dann deaktiviert, wenn das Vorliegen eines Not- beziehungsweise Ersatzrad erfasst wird.

**Patentansprüche**

1. Verfahren zur Einstellung der Brems- und/oder Antriebswirkung an den Rädern (101ij) eines Kraftfahrzeugs mit wenigstens zwei Rädern und mit den Rädern zugeordneten Sensoren (105ij), die die Drehbewegungen der Räder repräsentierende Drehzahlsignale (Nij) abgeben, wobei

   - die Drehzahlsignale (Nij) mittels einer Korrektur korrigiert werden und
   - die Einstellung der Brems- und/oder Antriebswirkung wenigstens abhängig von den korrigierten Ausgangssignalen der Sensoren getätigt wird, und
   - die Korrektur wenigstens zwei unterschiedliche Betriebsmodi (RTA$_{normal}$, RTA$_{quick}$) aufweist und
   - durch Erfassung der sich ergebenden unkorrigierten Radgeschwindigkeit

      • am schnellsten drehenden Rad und
      • am anderen Rad der gleichen Achse

   ermittelt wird, ob ein montiertes Ersatzrad vorliegt, das einen geringeren Durchmesser als die übrigen Räder aufweist, und
   - abhängig von dem ermittelten Vorliegen eines Ersatzrades eines der Modi (RTA$_{normal}$, RTA$_{quick}$) gewählt wird.

2. Verfahren nach Anspruch 1, **dadurch gekennzeichnet, daß** die Korrektur in einem ersten Betriebsmodus (RTA$_{quick}$) mit einer geringeren Filterzeitkonstante schneller als in einem zweiten Betriebsmodus (RTA$_{normal}$) mit einer größeren Filterzeitkonstante ausgeführt wird.

3. Verfahren nach Anspruch 1, **dadurch gekennzeichnet, daß** das Kraftfahrzeug mittels eines Fahrzeugmotors (103) angetrieben wird und die Korrektur in einem zweiten Betriebsmodus (RTA$_{normal}$) abhängig von einer das Ausgangsmoment und/oder die Ausgangsleistung des Fahrzeugmotors repräsentierenden Motorgröße (Mmot) und in einem ersten Betriebsmodus (RTA$_{quick}$) unabhängig von der Motorgröße getätigt wird.

4. Verfahren nach Anspruch 1, **dadurch gekennzeichnet, daß** erfaßt wird, ob das Fahrzeug eine Kurve befährt und die Korrektur in einem zweiten Betriebsmodus (RTA$_{normal}$) abhängig von einer erfaßten Kurvenfahrt und in einem ersten Betriebsmodus (RTA$_{quick}$) unabhängig von einer erfaßten Kurvenfahrt getätigt wird.

5. Verfahren nach Anspruch 1, **dadurch gekennzeichnet, daß** die Fahrzeuglängsgeschwindigkeit (V) erfaßt wird und die Korrektur in einem ersten Betriebsmodus (RTA$_{quick}$) bei geringerer Fahrzeuglängsgeschwindigkeit vorgenommen wird als in einem zweiten Betriebsmodus (RTA$_{normal}$).

6. Verfahren nach Anspruch 1, **dadurch gekennzeichnet, daß** die Fahrzeuglängsgeschwindigkeit (V) erfaßt wird und die Ermittlung, ob ein montiertes Ersatzrad vorliegt, bei Überschreitung eines vorgebbaren Geschwindigkeitsschwellenwertes (SW1) begonnen wird.

7. Verfahren nach Anspruch 1, **dadurch gekennzeichnet, daß** die Ermittlung, ob ein montiertes Ersatzrad vorliegt, derart geschieht, daß

   - aus den Drehzahlsignalen (Nij) das Rad mit der größten Drehgeschwindigkeit ermittelt wird,
   - geprüft wird, ob die Drehgeschwindigkeit (Nfast) des Rades mit der größten Drehgeschwindigkeit von der Drehgeschwindigkeit wenigstens eines anderen Rades (Nref) der selben Fahrzeugachse in vorgebbarer Weise (Tb) abweicht,
   - aus den Differenzen der Drehzahlen der Räder an der Achse, an der das Rad mit der größten Drehgeschwindigkeit nicht montiert ist, ermittelt wird, ob eine Kurvenfahrt vorliegt, und
   - das Rad mit der größten Drehgeschwindigkeit als Ersatzrad ermittelt wird, wenn die Drehgeschwindigkeit (Nfast) dieses Rades von der Drehgeschwindigkeit (Nref) wenigstens eines anderen Rades der selben Fahrzeugachse in vorgebbarer Weise, und insbesondere eine vorgebbare Zeitdauer (SW2) lang, abweicht und keine Kurvenfahrt vorliegt.

8. Verfahren nach Anspruch 1, **dadurch gekennzeichnet, daß** der Modus ((RTA$_{quick}$), der bei Vorliegen eines Ersatzrades gewählt wird, abhängig von einem Vergleich des korrigierten Ausgangssignals des Ersatzrades mit einem Ausgangssignal wenigstens eines Sensors an einem anderen Rad beendet wird.

9. Vorrichtung zur Einstellung der Brems- und/oder Antriebswirkung an den Rädern (101ij) eines Kraftfahrzeugs mit wenigstens zwei Rädern und mit den Rädern zugeordneten Sensoren (105ij), die die Drehbewegungen der Räder repräsentierende Drehzahlsignale (Nij) abgeben, wobei die Vorrichtung derart ausgebildet ist, daß

   - die Drehzahlsignale (Nij) mittels einer Korrektur korrigiert werden und
   - die Einstellung der Brems und/oder Antriebswirkung wenigstens abhängig von den korrigierten Ausgangssignalen der Sensoren getätigt wird, und

- die Korrektur wenigstens zwei unterschiedliche Betriebsmodi (RTA$_{normal}$, RTA$_{quick}$) aufweist und
- durch Erfassung der sich ergebenden unkorrigierten Radgeschwindigkeit

• am schnellsten drehenden Rad und
• am anderen Rad der gleichen Achse

ermittelt wird, ob ein montiertes Ersatzrad vorliegt, das einen geringeren Durchmesser als die übrigen Räder aufweist,
- abhängig von dem ermittelten Vorliegen eines Ersatzrades eines der Modi (RTA$_{normal}$, RTA$_{quick}$) gewählt wird.

10. Vorrichtung nach Anspruch 9, **dadurch gekennzeichnet, daß**

- die Korrektur in einem ersten Betriebsmodus (RTA$_{quick}$) mit einer geringeren Filterzeitkonstante schneller als in einem zweiten Betriebsmodus (RTA$_{normal}$) mit einer größeren Filterzeitkonstante ausgeführt wird, und/oder
- das Kraftfahrzeug mittels eines Fahrzeugmotors (103) angetrieben wird und die Korrektur in einem zweiten Betriebsmodus (RTA$_{normal}$) abhängig von einer das Ausgangsmoment und/oder die Ausgangsleistung des Fahrzeugmotors repräsentierenden Motorgröße (Mmot) und in einem ersten Betriebsmodus (RTA$_{quick}$) unabhängig von der Motorgröße getätigt wird, und/oder
- erfaßt wird, ob das Fahrzeug eine Kurve befährt und die Korrektur in einem zweiten Betriebsmodus (RTA$_{normal}$) abhängig von einer erfaßten Kurvenfahrt und in einem ersten Betriebsmodus (RTA$_{quick}$) unabhängig von einer erfaßten Kurvenfahrt getätigt wird, und/oder
- die Fahrzeuglängsgeschwindigkeit (V) erfaßt wird und die Korrektur in einem ersten Betriebsmodus (RTA$_{quick}$) bei geringerer Fahrzeuglängsgeschwindigkeit vorgenommen wird als in einem zweiten Betriebsmodus (RTA$_{normal}$), und/oder
- die Fahrzeuglängsgeschwindigkeit (V) erfaßt wird und die Ermittlung, ob ein montiertes Ersatzrad vorliegt, bei Überschreitung eines vorgebbaren Geschwindigkeitsschwellenwertes (SW1) begonnen wird.

11. Vorrichtung nach Anspruch 9, **dadurch gekennzeichnet, daß** die Ermittlung, ob ein montiertes Ersatzrad vorliegt, derart geschieht, daß

- aus den Drehzahlsignalen (Nij) das Rad mit der größten Drehgeschwindigkeit ermittelt wird,

- geprüft wird, ob die Drehgeschwindigkeit (Nfast) des Rades mit der größten Drehgeschwindigkeit von der Drehgeschwindigkeit wenigstens eines anderen Rades (Nref), der selben Fahrzeugachse/ in vorgebbarer Weise (Tb) abweicht,
- aus den Differenzen der Drehzahlen der Räder an der Achse, an der das Rad mit der größten Drehgeschwindigkeit nicht montiert ist, ermittelt wird, ob eine Kurvenfahrt vorliegt, und
- das Rad mit der größten Drehgeschwindigkeit als Ersatzrad ermittelt wird, wenn die Drehgeschwindigkeit (Nfast) dieses Rades von der Drehgeschwindigkeit (Nref) wenigstens eines anderen Rades der selben Fahrzeugachse in vorgebbarer Weise, und insbesondere eine vorgebbare Zeitdauer (SW2) lang, abweicht und keine Kurvenfahrt vorliegt.

12. Vorrichtung nach Anspruch 9, **dadurch gekennzeichnet, daß** der Modus ((RTA$_{quick}$), der bei Vorliegen eines Ersatzrades gewählt wird, abhängig von einem Vergleich des korrigierten Ausgangssignals des Ersatzrades mit einem Ausgangssignal wenigstens eines Sensors an einem anderen Rad beendet wird.

**Claims**

1. Method for adjusting the braking and/or drive effects on the wheels (101ij) of a motor vehicle having at least two wheels and having sensors (105ij) which are assigned to the wheels and which output rotational speed signals (Nij) which represent the rotational movements of the wheels, in which

- the rotational speed signals (Nij) are corrected using a correction means, and
- the adjusting of the braking and/or drive effects is activated at least as a function of the corrected output signals of the sensors, and
- the correction means has at least two different operating modes (RTA$_{normal}$, RTA$_{quick}$) and
- by sensing the resulting uncorrected wheel speed

• at the fastest rotating wheel and
• at the other wheel on the same axle

it is determined whether there is a mounted spare wheel which has a smaller diameter than the other wheels, and
- one of the modes (RTA$_{normal}$, RTA$_{quick}$) is selected as a function of the determined presence of a spare wheel.

2. Method according to Claim 1, **characterized in that** the correction is carried out in a first operating mode (RTA$_{quick}$) with a smaller filter time constant more quickly than in a second operating mode (RTA$_{normal}$) with a larger filter time constant.

3. Method according to Claim 1, **characterized in that** the motor vehicle is driven by means of a vehicle engine (103), and in a second operating mode (RTA$_{normal}$) the correction is activated as a function of an engine variable (Mmot) which represents the output torque and/or the output power of the vehicle engine, and in a first operating mode (RTA$_{quick}$) it is activated independently of the engine variable.

4. Method according to Claim 1, **characterized in that** it is sensed whether the vehicle is travelling through a bend, and in a second operating mode (RTA$_{normal}$) the correction is activated as a function of sensed cornering, and in a first operating mode (RTA$_{quick}$) it is activated independently of sensed cornering.

5. Method according to Claim 1, **characterized in that** the longitudinal speed (V) of the vehicle is sensed, and in a first operating mode (RTA$_{quick}$) the correction is performed at a lower longitudinal speed of the vehicle than in a second operating mode (RTA$_{normal}$).

6. Method according to Claim 1, **characterized in that** the longitudinal speed (V) of the vehicle is sensed and the determination of whether there is a mounted spare wheel is started when a predefinable speed threshold value (SW1) is exceeded.

7. Method according to Claim 1, **characterized in that** the determination of whether there is a mounted spare wheel is carried out in such a way that

  - the wheel with the highest rotational speed is determined from the rotational speed signals (Nij)
  - it is checked whether the rotational speed (Nfast) of the wheel with the highest rotational speed differs in a predefinable fashion (Tb) from the rotational speed of at least one other wheel (Nref) on the same vehicle axle,
  - it is determined whether cornering is occurring from the differences between the rotational speeds of the wheels on the axle on which the wheel with the highest rotational speed is not mounted, and
  - the wheel with the highest rotational speed is determined as being a spare wheel if the rotational speed (Nfast) of this wheel differs in a predefinable fashion from the rotational speed (Nref) of at least one other wheel on the same vehicle axle, and in particular differs for a predefinable time period (SW2), and cornering is not occurring.

8. Method according to Claim 1, **characterized in that** the mode (RTA$_{quick}$) which is selected when there is a spare wheel is ended as a function of a comparison of the corrected output signal of the spare wheel with an output signal of at least one sensor on another wheel.

9. Device for adjusting the braking and/or drive effects on the wheels (101ij) of a motor vehicle having at least two wheels and having sensors (105ij) which are assigned to the wheels and which output rotational speed signals (Nij) which represent the rotational movements of the wheels, in which the device is designed in such a way that,

  - the rotational speed signals (Nij) are corrected using a correction means, and
  - the adjusting of the braking and/or drive effects is activated at least as a function of the corrected output signals of the sensors, and
  - the correction means has at least two different operating modes (RTA$_{normal}$, RTA$_{quick}$) and
  - by sensing the resulting uncorrected wheel speed

    • at the fastest rotating wheel and
    • at the other wheel on the same axle it is determined whether there is a mounted spare wheel which has a smaller diameter than the other wheels, and

  - one of the modes (RTA$_{normal}$, RTA$_{quick}$) is selected as a function of the determined presence of a spare wheel.

10. Device according to Claim 9, **characterized in that**

  - the correction is carried out in a first operating mode (RTA$_{quick}$) with a smaller filter time constant more quickly than in a second operating mode (RTA$_{normal}$) with a larger filter time constant, and/or
  - the motor vehicle is driven by means of a vehicle engine (103), and in a second operating mode (RTA$_{normal}$) the correction is activated as a function of an engine variable (Mmot) which represents the output torque and/or the output power of the vehicle engine, and in a first operating mode (RTA$_{quick}$) it is activated independently of the engine variable, and/or
  - it is sensed whether the vehicle is travelling through a bend, and in a second operating mode (RTA$_{normal}$) the correction is activated as a function of sensed cornering, and in a first operating mode (RTA$_{quick}$) it is activated independently of sensed cornering, and/or

- the longitudinal speed (V) of the vehicle is sensed, and in a first operating mode (RTA$_{quick}$) the correction is performed at a lower longitudinal speed of the vehicle than in a second operating mode (RTA$_{normal}$), and/or
- the longitudinal speed (V) of the vehicle is sensed and the determination of whether there is a mounted spare wheel is started when a predefinable speed threshold value (SW1) is exceeded.

**11.** Device according to Claim 9, **characterized in that** the determination of whether there is a mounted spare wheel is carried out in such a way that

- the wheel with the highest rotational speed is determined from the rotational speed signals (Nij)
- it is checked whether the rotational speed (Nfast) of the wheel with the highest rotational speed differs in a predefinable fashion (Tb) from the rotational speed of at least one other wheel (Nref) on the same vehicle axle,
- it is determined whether cornering is occurring from the differences between the rotational speeds of the wheels on the axle on which the wheel with the highest rotational speed is not mounted, and
- the wheel with the highest rotational speed is determined as being a spare wheel if the rotational speed (Nfast) of this wheel differs in a predefinable fashion from the rotational speed (Nref) of at least one other wheel on the same vehicle axle, and in particular differs for a predefinable time period (SW2), and cornering is not occurring.

**12.** Device according to Claim 9, **characterized in that** the mode (RTA$_{quick}$) which is selected when there is a spare wheel is ended as a function of a comparison of the corrected output signal of the spare wheel with an output signal of at least one sensor on another wheel.

## Revendications

**1.** Procédé permettant le réglage de l'effet de freinage et/ou d'entraînement sur les roues (101ij) d'un véhicule à moteur comportant au moins deux roues et des capteurs (105ij), associés aux roues, qui délivrent les signaux de vitesse représentant les mouvements de rotation des roues, selon lequel

- les signaux de vitesse (Nij) sont corrigés au moyen d'une correction,
- le réglage de l'effet de freinage et/ou d'entraînement est effectué au moins en fonction des signaux de départ corrigés des capteurs, et
- la correction présente au moins deux modes de fonctionnement différents (RTA$_{normal}$, RTA$_{rapide}$), et
- par la détection de la vitesse des roues non corrigée qui en résulte

  • sur la roue tournant le plus vite et
  • sur l'autre roue du même axe,

- on détermine s'il existe une roue de secours montée qui présente un diamètre plus faible que les autres roues, et
- on choisit l'un des modes (RTA$_{normal}$, RTA$_{rapide}$) en fonction de la présence déterminée d'une roue de secours.

**2.** Procédé selon la revendication 1, **caractérisé en ce que** dans un premier mode de fonctionnement (RTA$_{rapide}$) la correction avec une constante du temps de filtrage plus faible est effectuée plus rapidement que dans un deuxième mode de fonctionnement (RTA$_{normal}$) ayant une constante du temps de filtrage plus importante.

**3.** Procédé selon la revendication 1, **caractérisé en ce que** le véhicule à moteur est entraîné au moyen d'un moteur (103) et la correction est effectuée dans un deuxième mode de fonctionnement (RTA$_{normal}$) en fonction d'un paramètre du moteur (Mmot) représentant le couple de départ et/ou la puissance de départ du moteur, et dans un premier mode de fonctionnement (RTA$_{rapide}$) indépendamment de la taille du moteur.

**4.** Procédé selon la revendication 1, **caractérisé en ce qu'** on détecte si le véhicule prend un virage, et on effectue la correction dans un deuxième mode de fonctionnement (RTA$_{normal}$) si un virage est détecté et dans un premier mode de fonctionnement (RTA$_{rapide}$) la correction est faite indépendamment de la détection d'un virage.

**5.** Procédé selon la revendication 1, **caractérisé en ce qu'** on détecte la vitesse longitudinale du véhicule (V) et on effectue la correction dans un premier mode de fonctionnement (RTA$_{rapide}$) à une vitesse longitudinale du véhicule plus lente que dans un deuxième mode de fonctionnement (RTA$_{normal}$).

**6.** Procédé selon la revendication 1, **caractérisé en ce qu'** on détecte la vitesse longitudinale de véhicule (V) et on commence la détermination de la présence d'une roue de secours montée lorsqu'on dépasse une valeur seuil de vitesse prédéfinissable (SW1).

**7.** Procédé selon la revendication 1,
**caractérisé en ce qu'**
on détermine la présence d'une roue de secours montée :

- en déterminant la roue tournant le plus vite à partir des signaux de vitesse (Nij),
- en vérifiant si la vitesse de rotation (Nrapide) de la roue tournant le plus vite est différente, de manière prédéfinissable (Tb) de la vitesse de rotation d'au moins une autre roue (Nréf.) du même essieu,
- en déterminant, à partir des différences de vitesses des roues sur l'essieu sur lequel la roue tournant le plus vite est montée, s'il y a un virage, et
- en déterminant la roue tournant le plus vite en tant que roue de secours si la vitesse de rotation (Nrapide) de cette roue diffère, de façon prédéfinissable, de la vitesse de rotation (Nréf.) d'au moins une autre roue du même essieu et, en particulier, pendant une durée prédéfinissable (SW2) et s'il n'y a pas de virage.

**8.** Procédé selon la revendication 1,
**caractérisé en ce que**
le mode (RTA$_{rapide}$)), qui est choisi en présence d'une roue de secours, se termine en fonction d'une comparaison du signal de sortie corrigé de la roue de secours avec un signal de sortie d'au moins un capteur sur une autre roue.

**9.** Dispositif de réglage de l'effet de freinage et/ou d'entraînement sur les roues (101ij) d'un véhicule à moteur comportant au moins deux roues et des capteurs (105ij), associés aux roues, qui délivrent les signaux de vitesse (Nij) représentant les mouvements de rotation des roues,
dans lequel

- les signaux de vitesse (Nij) sont corrigés au moyen d'une correction et
- le réglage de l'effet de freinage et/ou d'entraînement est réalisé au moins en fonction des signaux de départ corrigés des capteurs, et
- la correction présente au moins deux modes de fonctionnement différents (RTA$_{normal}$, RTA$_{rapide}$) et
- la détection de la vitesse des roues non corrigée qui en résulte

• sur la roue tournant le plus vite et
• sur l'autre roue du même axe

permet de déterminer s'il existe une roue de secours montée qui présente un diamètre plus faible que les autres roues, et
- de choisir l'un des modes (RTA$_{normal}$, RTA$_{rapide}$) en fonction de la présence déterminée d'une roue de secours.

**10.** Dispositif selon la revendication 9,
**caractérisé en ce que**

- dans un premier mode de fonctionnement (RTA$_{rapide}$) la correction avec une constante du temps de filtrage plus faible est effectuée plus rapidement que dans un deuxième mode de fonctionnement (RTA$_{normal}$) ayant une constante du temps de filtrage plus importante et/ou
- le véhicule à moteur est entraîné au moyen d'un moteur (103) et la correction est effectuée dans un deuxième mode de fonctionnement (RTA$_{normal}$) en fonction d'un paramètre du moteur (Mmot) représentant le couple de départ et/ou la puissance de départ du moteur et dans un premier mode de fonctionnement (RTA$_{rapide}$) indépendamment de la taille du moteur, et/ou
- on détecte si le véhicule prend un virage, et la correction est effectuée dans un premier mode de fonctionnement (RTA$_{normal}$) si un virage est détecté et dans un premier mode de fonctionnement (RTA$_{rapide}$) la correction est indépendante de la détection d'un virage, et/ou
- la vitesse longitudinale du véhicule (V) est détectée et la correction est effectuée dans un premier mode de fonctionnement (RTA$_{rapide}$) à une vitesse longitudinale du véhicule plus lente que dans un deuxième mode de fonctionnement (RTA$_{normal}$), et/ou
- la vitesse longitudinale de véhicule (V) est détectée et la détermination de la présence d'une roue de secours montée commence lorsqu'on dépasse une valeur seuil de vitesse prédéfinissable (SW1).

**11.** Dispositif selon la revendication 9,
**caractérisé en ce qu'**
on détermine s'il existe une roue de secours montée :

- en déterminant la roue tournant le plus vite à partir des signaux de vitesse (Nij),
- en vérifiant si la vitesse de rotation (Nrapide) de la roue tournant le plus vite est différente, de manière prédéfinissable (Tb) de la vitesse de rotation d'au moins une autre roue (Nréf.) du même essieu,
- en déterminant, à partir des différences de vitesses des roues sur l'essieu sur lequel la roue tournant le plus vite est montée, s'il y a un virage, et
- en déterminant la roue tournant le plus vite en tant que roue de secours si la vitesse de rotation (Nrapide) de cette roue diffère, de façon prédéfinissable, de la vitesse de rotation (Nréf.) d'au moins une autre roue du même essieu et, en particulier, pendant une durée prédéfinissable (SW2) et s'il n'y a pas de virage.

12. Dispositif selon la revendication 9,
**caractérisé en ce que**
le mode (RTA$_{rapide}$), choisi en présence d'une roue de secours, se termine en fonction d'une comparaison du signal de sortie corrigé de la roue de secours avec un signal de sortie d'au moins un capteur sur une autre roue.

**FIG. 1**

```
        ┌─────────────┐
        │    Start    │──────── 201
        └──────┬──────┘
               │
               ▼
        ┌─────────────┐
        │   Erfasse   │
        │   Nij, ...  │──────── 202
        └──────┬──────┘
               │
               ▼
   ┌──────────────────────┐
   │      Ermittle        │
   │ Bij = F ( Nij,...)   │──── 203
   │ A   = G (Nij,...)    │
   └──────────┬───────────┘
              │
              ▼
        ┌─────────────┐
        │    Ende     │──────── 204
        └─────────────┘
```

# FIG. 2

FIG. 3